(19) Europäisches Patentamt
European Patent Office
Office européen des brevets

(11) **EP 2 538 514 B1**

(12) **FASCICULE DE BREVET EUROPEEN**

(45) Date de publication et mention
de la délivrance du brevet:
**29.08.2018 Bulletin 2018/35**

(51) Int Cl.:
*H02J 1/00* (2006.01)   *H02J 9/00* (2006.01)

(21) Numéro de dépôt: **12305703.6**

(22) Date de dépôt: **21.06.2012**

(54) **Carte de circuit imprimé pour boîtier de compresseur**

Karte mit gedruckter Schaltung für Kompressorgehäuse

Printed circuit board for compressor housing

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.06.2011 FR 1101966**

(43) Date de publication de la demande:
**26.12.2012 Bulletin 2012/52**

(73) Titulaire: **Valeo Japan Co., Ltd.
Saitama 360-0193 (JP)**

(72) Inventeurs:
• **Sardat, Pierre
93340 Le Raincy (FR)**
• **Hadjelis, Bruno
95310 Saint Ouen L'Aumone (FR)**
• **Lescot, Hubert
95610 Eragny (FR)**

(74) Mandataire: **Tran, Chi-Hai
Valeo Systèmes Thermiques
8, rue Louis Lormand
CS 80517 La Verrière
78322 Le Mesnil Saint Denis Cedex (FR)**

(56) Documents cités:
**US-A- 5 636 109      US-A1- 2004 184 289
US-A1- 2011 012 554**

## Description

La présente invention se rapporte à une carte de circuit imprimé, notamment pour un boîtier de compresseur.

L'invention s'intéresse plus particulièrement au domaine des compresseurs entraînés électriquement, utilisés notamment dans les systèmes de climatisation des véhicules automobiles.

Un tel compresseur est commandé à l'aide d'un microprocesseur intégré sur une carte de circuit imprimé disposée sur un boîtier du compresseur. Le document US2004/0184289 montre une carte de circuit imprimé suivant le préambule de la revendication 1.

Cette carte de circuit imprimé comprend généralement trois portions :

- une première portion ayant des premiers composants électroniques dont la masse de référence est sur une première source de tension ;
- une deuxième portion ayant des deuxièmes composants électroniques dont la masse de référence est sur une deuxième source de tension ; et
- une troisième portion intercalée entre la première et la deuxième portions et formant barrière de potentiel.

Sur cette carte, le microprocesseur est intégré sur la deuxième portion tout en étant alimenté par la première source de tension par l'intermédiaire d'un circuit d'alimentation à découpage reliant la première et la seconde portion.

Afin de sauvegarder l'énergie électrique, lorsque le compresseur est à l'arrêt, il est nécessaire de couper le circuit d'alimentation à découpage.

L'ordre de couper le circuit d'alimentation à découpage est donné par le microprocesseur par l'envoi d'un signal à travers la barrière de potentiel par l'intermédiaire d'un composant d'isolation. Généralement, le composant d'isolation utilisé est un optocoupleur.

Cependant, l'utilisation d'un optocoupleur présente plusieurs inconvénients.

En effet, l'utilisation d'un optocoupleur dans une application automobile n'est pas aisée en raison de problèmes de fiabilité de ce composant qui n'est pas qualifié pour le secteur automobile. De plus, l'ajout de composants représente un volume et un poids supplémentaires.

En outre, les optocoupleurs sont coûteux et ont une durée de vie limitée.

L'invention se propose d'améliorer la situation.

Le but de la présente invention est donc d'éviter l'utilisation d'un composant d'isolation.

L'invention concerne tout d'abord une carte de circuit imprimé comprenant :

- une première portion ayant des premiers composants électroniques dont la masse de référence est sur une première source de tension ;
- une deuxième portion ayant des deuxièmes composants électroniques dont la masse de référence est sur une deuxième source de tension ;
- une troisième portion intercalée entre la première et la deuxième portion et formant barrière de potentiel ;
- un circuit d'alimentation à découpage raccordant la première et la deuxième portion, ledit circuit d'alimentation à découpage comprenant un transformateur ayant un primaire et au moins un secondaire, le primaire étant raccordé à la première portion et le secondaire étant raccordé à la deuxième portion

ladite deuxième portion comprenant également au moins un composant électronique alimenté en tension par ladite première source de tension par l'intermédiaire du circuit d'alimentation à découpage,
caractérisée en ce qu'elle comprend en outre des moyens de détection d'une baisse de consommation électrique du composant, lesdits moyens de détection étant aptes à détecter une baisse d'un courant électrique circulant dans le primaire du transformateur en dessous d'un seuil de courant prédéterminé fonction de la baisse prédéterminée de consommation électrique dudit composant, et des moyens de coupure du circuit d'alimentation à découpage lorsqu'une baisse prédéterminée de consommation électrique dudit composant est détectée.

Par exemple, la première source de tension délivre une tension inférieure à celle de la deuxième tension. Dans un exemple particulier, la première source de tension est une basse tension et la deuxième source de tension est une haute tension. Notamment, dans le cadre de la présente demande, une basse tension désigne une tension inférieure à 60V et une haute tension désigne une tension supérieure à 60V.

Ainsi, la présente invention permet de transférer l'ordre de couper le circuit d'alimentation à découpage depuis la deuxième portion vers la première portion sans passer par un composant d'isolation, en utilisant une détection de la baisse de consommation électrique.

Le transformateur comprend une isolation galvanique entre son entrée (primaire du transformateur) et sa ou ses sorties (secondaires du transformateur).

Le seuil de courant est notamment fonction de la consommation au repos du composant alimenté en basse tension.

De préférence, les moyens de détection comprennent un comparateur. Ce comparateur compare le courant circulant dans le primaire au seuil de courant. Cette comparaison utilise notamment une tension image de ce courant circulant dans le primaire.

Avantageusement, le composant électronique est un microprocesseur commandant l'alimentation d'un dispositif par l'intermédiaire d'au moins un composant parmi les deuxièmes composants.

Selon une réalisation préférée, le dispositif est un moteur de compresseur.

Avantageusement, la baisse prédéterminée correspond à une mise en veille du composant.

De préférence, la carte comprend des moyens d'inhibition des moyens de coupure lors d'une mise en marche de la carte.

L'invention concerne également un procédé de commande d'une carte de circuit imprimé, ladite carte comprenant :

- une première portion ayant des premiers composants électroniques dont la masse de référence est sur une première source de tension ;
- une deuxième portion ayant des deuxièmes composants électroniques dont la masse de référence est sur une deuxième source de tension ;
- une troisième portion intercalée entre la première et la deuxième portion et formant barrière de potentiel ;
- un circuit d'alimentation à découpage raccordant la première et la deuxième portion ;

ledit circuit d'alimentation à découpage comprenant un transformateur ayant un primaire et au moins un secondaire, le primaire étant raccordé à la première portion et le secondaire étant raccordé à la deuxième portion; ladite deuxième portion comprenant également au moins un composant électronique alimenté en tension par ladite première source de tension par l'intermédiaire du circuit d'alimentation à découpage, ledit procédé comprenant les étapes de :

- détection d'une baisse d'un courant électrique circulant dans le primaire du transformateur en dessous d'un seuil de courant prédéterminé fonction d'une baisse de consommation électrique du composant ; et
- coupure de l'alimentation lorsqu'une baisse prédéterminée de consommation électrique dudit composant est détectée.

Avantageusement, la baisse prédéterminée correspond à une mise en veille du composant et le procédé comprend en outre, avant l'étape de coupure, les étapes de :

- réception par le composant d'un ordre de coupure de l'alimentation ; et
- mise en veille du composant.

L'invention concerne également un boîtier de compresseur comprenant une carte de circuit imprimé selon l'invention.

D'autres caractéristiques, détails et avantages de l'invention ressortiront plus clairement à la lecture de la description donnée ci-après à titre indicatif en relation avec des dessins dans lesquels :

- la figure 1 est un schéma illustrant la structure d'un compresseur pour véhicule automobile ;
- la figure 2 est un schéma illustrant la structure détaillée d'une carte de circuit imprimé du compresseur de la figure 1, selon un mode de réalisation de l'invention ;

- la figure 3 est un schéma illustrant la structure d'un exemple de circuit d'alimentation à découpage de la carte selon un mode de réalisation de l'invention ;
- la figure 4 est un graphique illustrant le fonctionnement d'un circuit d'alimentation à découpage ;
- la figure 5 est un schéma illustrant la structure d'un exemple de moyens de détection de la carte selon un mode de réalisation de l'invention ;
- la figure 6 est un organigramme illustrant le fonctionnement du procédé de commande selon l'invention ; et
- la figure 7 est un graphique illustrant un exemple de mise en oeuvre du procédé selon l'invention.

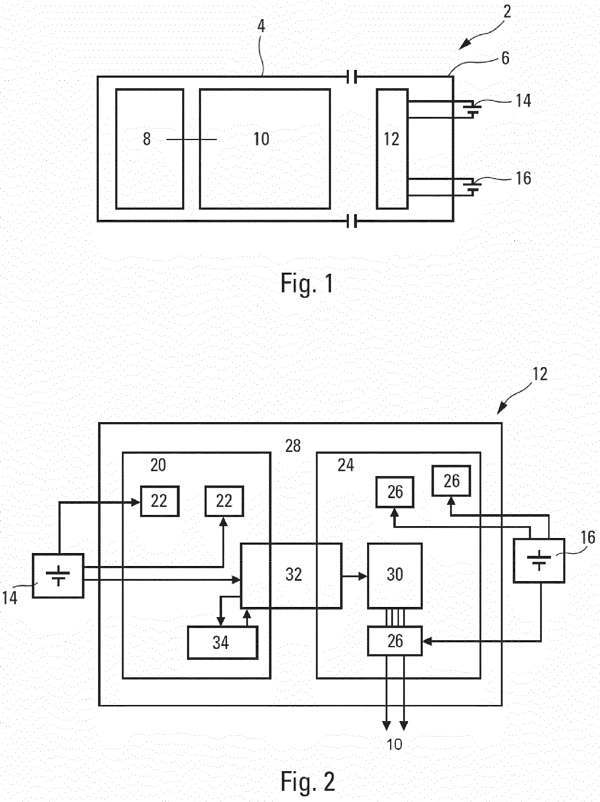

La figure 1 illustre un compresseur 2 d'un dispositif de climatisation pour véhicule automobile dans lequel la présente invention peut être mise en oeuvre.

Le compresseur 2 comprend un premier boîtier 4 et un deuxième boîtier 6.

Le premier boîtier 4 comprend un mécanisme de compression 8 à entraînement électrique.

Le premier boîtier 4 comprend également un moteur électrique 10 pour l'entraînement du mécanisme de compression 8.

Le deuxième boîtier 6, généralement en aluminium comprend une carte de circuit imprimé 12 dite carte PCB (selon l'acronyme anglais « Printed Circuit Board ») pour la commande du mécanisme de compression 8. Cette carte PCB forme notamment un onduleur qui alimente et commande le moteur électrique 10.

La carte PCB 12 est apte à être alimentée en basse tension et en haute tension par une alimentation basse tension 14 et une alimentation haute tension 16, respectivement.

Une basse tension désigne une tension inférieure à 60V, typiquement égale à 12V, et une haute tension désigne une tension supérieure à 60V, typiquement égale à 350V. La basse tension correspond à la tension disponible sur un réseau sécurisé du véhicule alors que la haute tension provient d'une source électrique qui alimente également un moteur électrique chargé d'animer le déplacement du véhicule.

La figure 2 illustre la structure détaillée de la carte 12 selon un mode de réalisation préféré de l'invention.

La carte 12 comprend trois portions distinctes.

La première portion 20 de la carte 12 supporte des premiers composants électroniques 22 aptes à être alimentés en basse tension par l'alimentation basse tension 14.

La deuxième portion 24 de la carte 12 supporte des deuxièmes composants électroniques 26 aptes à être alimentés en haute tension par l'alimentation haute tension 16.

La troisième portion 28 est intercalée entre la première portion 20 et la deuxième portion 24. Elle forme une barrière de potentiel entre les deux portions 20, 24.

Cette troisième portion 28 est dépourvue de pistes électriques et présente de préférence une largeur minimum de 4,5 mm.

La deuxième portion 24 comprend également un microprocesseur 30 alimenté en basse tension par l'alimentation 14 par l'intermédiaire d'un circuit d'alimentation à découpage 32.

Dans une variante, le microprocesseur 30 est remplacé par un ou plusieurs composants électroniques alimentés en basse tension par l'alimentation 14.

Le microprocesseur 30 est apte à commander l'alimentation du moteur 10 du compresseur 2 via un deuxième composant 26 alimenté en haute tension, comme, par exemple, une carte de puissance reliée au moteur 10 du compresseur 2.

Le circuit d'alimentation à découpage 32 est disposé à cheval entre les trois portions 20, 28, 24 de la carte 12. Il est raccordé en entrée à l'alimentation basse tension 14 et en sortie au microprocesseur 30.

La première portion 20 comprend aussi des moyens de détection 34 d'une baisse de consommation électrique du microprocesseur 30 afin de couper le circuit d'alimentation à découpage 32 lorsqu'une baisse de consommation électrique prédéterminée du microprocesseur 30 est détectée.

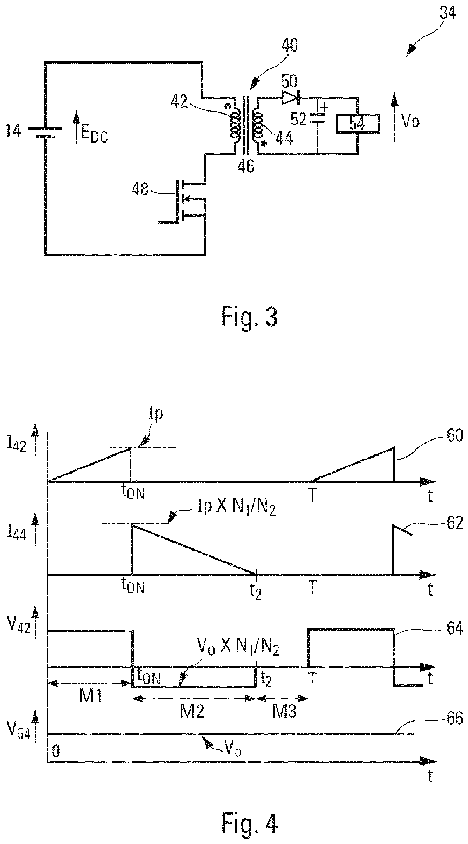

La figure 3 illustre la structure du circuit d'alimentation à découpage 32 selon un mode de réalisation préféré de l'invention.

Selon ce mode de réalisation préféré, le circuit d'alimentation à découpage 32 est un convertisseur Flyback. Le convertisseur Flyback comprend un transformateur 40 comprenant une première inductance 42 et une deuxième inductance 44 couplées.

La première inductance 42, de valeur L1 et ayant un nombre de spires égal à N1, constitue le primaire du transformateur 40. Elle est raccordée à la première portion 20 de la carte 12.

La deuxième inductance 44, de valeur L2 et ayant un nombre de spires égal à N2, constitue le secondaire du transformateur 40. Elle est raccordée à la deuxième portion 24 de la carte 12.

Une isolation galvanique 46 sépare le primaire 42 et le secondaire 44.

Le primaire 42 est alimenté par l'alimentation basse tension 14 par l'intermédiaire d'un interrupteur 48 comprenant un transistor MOSFET, par exemple.

Le secondaire 44 est raccordé à une diode 50, elle-même raccordée à un condensateur 52 raccordé en parallèle à une charge 54 comprenant notamment le microprocesseur 30.

Le fonctionnement du circuit d'alimentation à découpage 32 est détaillé en référence aux courbes 60, 62, 64, 66 de la figure 4 qui illustrent respectivement l'évolution du courant du primaire $I_{42}$, du courant du secondaire $I_{44}$, de la tension du primaire $V_{42}$ et de la tension de la charge $V_{54}$ en fonction du temps.

Le circuit d'alimentation à découpage 32 fonctionne, selon une période de découpage T, conformément à un rapport cyclique prédéterminé égal à $\alpha = t_{ON}/T$, $t_{ON}$ représentant la durée pendant laquelle l'interrupteur 48 conduit.

La tension de la charge $V_{54}$ est constante et égale à $V_0 = \dfrac{N2}{N1} \dfrac{\alpha}{1-\alpha} E_{DC}$, où $E_{DC}$ est la tension délivrée par l'alimentation basse tension 14, $\alpha$ est le rapport cyclique du circuit d'alimentation, N1 est le nombre de spires du primaire 42 et N2 est le nombre de spires du secondaire 44.

Dans l'état passant, pour le temps t compris entre 0 et $t_{ON}$, l'interrupteur 48 est fermé. Le primaire 42 du transformateur 40 est relié directement à l'alimentation 14, de sorte que la tension $V_{42}$ du primaire est égale à la tension $E_{DC}$ générée par l'alimentation 14. Il en résulte une augmentation du flux magnétique dans le transformateur 40. Le courant $I_{42}$ du primaire 42 augmente alors selon la relation $I_{42} = \dfrac{E_{DC}}{L1} t$, où t représente le temps, $E_{DC}$ est la tension délivrée par l'alimentation basse tension 14 et L1 la valeur de l'inductance du primaire 42.

A la fin de l'état passant, $I_{42}$ atteint sa valeur maximale $I_P = \dfrac{E_{DC}}{L1} t_{ON}$, où $t_{ON}$ représente la durée pendant laquelle l'interrupteur 48 conduit, $E_{DC}$ est la tension délivrée par l'alimentation basse tension 14 et L1 la valeur de l'inductance du primaire 42.

En outre, $I_P$ est fonction de la puissance P des composants raccordés au secondaire 44 selon la relation

$$I_P = \sqrt{\dfrac{2*P}{L1*F_d}}$$ où $F_d$ est la fréquence de découpage du convertisseur. Il est ainsi possible de déterminer la durée $t_{ON}$ à partir de la puissance P.

Selon un exemple de réalisation non représenté, le transformateur comprend deux secondaires. La puissance P est obtenue, selon cet exemple, grâce à un secondaire raccordé à la masse de la première portion couplé avec un secondaire raccordé à la masse de la deuxième portion et alimentant le microprocesseur.

En revenant à la figure 3, dans l'état passant, la tension aux bornes du secondaire 44 est négative, bloquant ainsi la diode 50, de sorte que le courant du secondaire $I_{44}$ est nul. C'est le condensateur 52 qui fournit l'énergie demandée par la charge 54.

A la fin de l'état passant, au temps $t_{ON}$, l'interrupteur 48 s'ouvre empêchant ainsi le courant du primaire $I_{42}$ de continuer à circuler. La conservation de l'énergie stockée dans le transformateur 40 provoque l'apparition d'un courant $I_{44}$ dans le secondaire du transformateur 40, dont la valeur initiale est égale à $I_P \times \dfrac{N1}{N2}$. Le courant $I_{44}$ est donné par la relation

$$I_{44} = I_P \times \frac{N1}{N2} - \frac{V_0}{L_2}\left(t - t_{ON}\right).$$ $I_{44}$ s'annule à $t=t_2$.

La tension du primaire $V_{42}$, entre $t_{ON}$ et $t_2$, est donnée par la relation $V_{42} = -\dfrac{N1}{N2}V_0$. Elle est nulle entre $t_2$ et T.

Ainsi, au cours d'une période, le circuit d'alimentation à découpage fonctionne selon 3 modes distincts : un premier mode M1 pour le temps compris entre 0 et $t_{ON}$, un deuxième mode M2 pour le temps compris entre $t_{ON}$ et $t_2$ et un troisième mode M3 pour le temps compris entre $t_2$ et T.

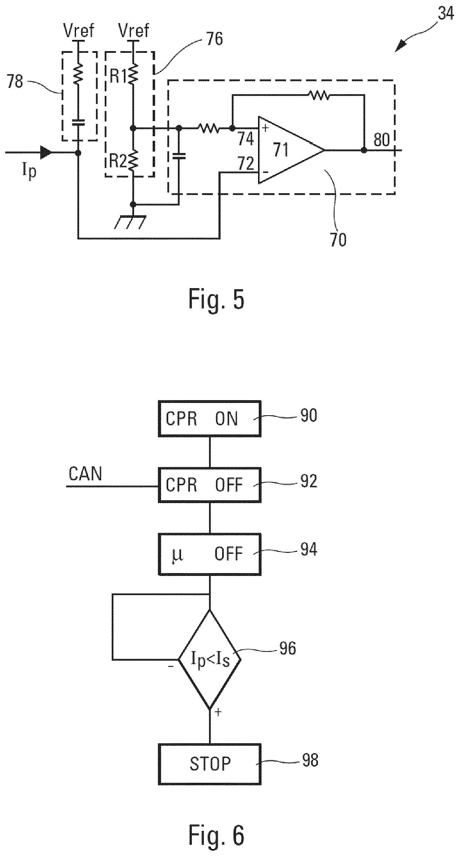

La figure 5 détaille la structure des moyens de détection 34 d'une baisse de consommation du microprocesseur 30. Cette baisse de consommation se traduit par une baisse de la puissance électrique au secondaire 44 impliquant une baisse du courant maximal $I_P$ du primaire 42.

Les moyens de détection 34 comprennent un comparateur 70 de préférence à hystérésis.

Le comparateur 70 comprend un amplificateur d'erreur 71 recevant sur une entrée inverseuse 72 un signal représentant le courant maximal $I_P$ du primaire et sur une entrée non inverseuse 74 un signal représentant un seuil de courant $I_S$ prédéterminé. Ce seuil est fixé au moyen d'un circuit 76 comprenant deux résistances R1 et R2 en série. Le seuil $I_s$ est choisi de manière à correspondre à une baisse prédéterminée de consommation électrique du microprocesseur 30. Par exemple, la baisse prédéterminée de consommation électrique correspond à une mise en veille du microprocesseur 30.

Les moyens de détection 34 comprennent en outre des moyens d'inhibition 78 du comparateur 70 lors de la phase de démarrage. Ces moyens d'inhibition 78 comprennent de préférence un circuit RC pour relever le potentiel de l'entrée non-inverseuse 74 de l'amplificateur d'erreur 71 afin d'imposer toujours un état bas en sortie 80 du comparateur 70 sur toute la phase de démarrage. Ainsi, il n'y a pas de risque de couper l'alimentation 14 lors de la phase de démarrage.

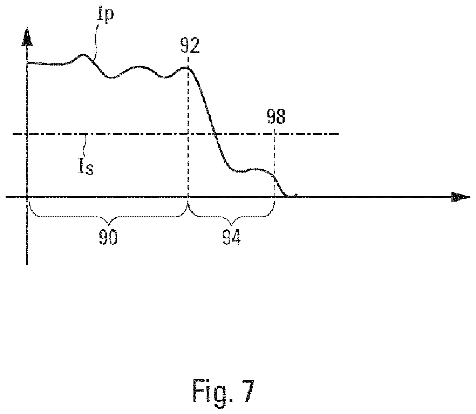

L'organigramme de la figure 6 et le graphique de la figure 7 détaillent le fonctionnement du procédé de commande de l'alimentation.

Lors d'une étape 90, le compresseur 2 est en marche.

A l'étape 92, le microprocesseur 30 reçoit, par exemple depuis un bus CAN du véhicule, un ordre d'arrêt de l'alimentation du compresseur 2. Il commande alors l'arrêt du compresseur 2 et entre, lors de l'étape 94, en mode de mise en veille.

Cela entraîne une baisse de la consommation électrique du microprocesseur 30 qui se traduit par une chute de puissance au secondaire 44 du transformateur et donc par une baisse du courant crête à crête $I_P$ du primaire 42.

A l'étape 96, les moyens de détection 34 comparent le courant $I_P$ au seuil $I_S$. Lorsque la valeur du courant $I_P$ descend en dessous de $I_S$, l'alimentation basse tension 14 est coupée à l'étape 98.

Bien entendu, d'autres modes de réalisation peuvent être envisagés.

La carte selon l'invention a été décrite dans un exemple dans lequel l'alimentation à découpage est un convertisseur Flyback. Cependant la carte selon l'invention peut comprendre un autre type d'alimentation à découpage.

**Revendications**

1. Carte de circuit imprimé (12) comprenant :

   - une première portion (20) ayant des premiers composants électroniques (22) dont la masse de référence est sur une première source de tension (14) ;
   - une deuxième portion (24) ayant des deuxièmes composants électroniques (26) dont la masse de référence est sur une deuxième source de tension (16) ;
   - une troisième portion (28) intercalée entre la première (20) et la deuxième (24) portion et formant barrière de potentiel ;
   - un circuit d'alimentation à découpage (32) raccordant la première (20) et la deuxième (24) portion, ledit circuit d'alimentation à découpage (32) comprenant un transformateur (40) ayant un primaire (42) et au moins un secondaire (44), le primaire (42) étant raccordé à la première portion (20) et le secondaire (44) étant raccordé à la deuxième portion (24) ;

   ladite deuxième portion (24) comprenant également au moins un composant électronique (30) alimenté en tension par ladite première source de tension (14) par l'intermédiaire du circuit d'alimentation à découpage (32),
   **caractérisée en ce qu'**elle comprend en outre des moyens de détection (34) d'une baisse de consommation électrique du composant (30), lesdits moyens de détection (34) étant aptes à détecter une baisse d'un courant électrique ($I_P$) circulant dans le primaire (42) du transformateur (40) en dessous d'un seuil de courant prédéterminé ($I_S$) fonction de la baisse prédéterminée de consommation électrique dudit composant (30), et des moyens de coupure du circuit d'alimentation à découpage (32) lorsqu'une baisse prédéterminée de consommation électrique dudit composant (30) est détectée.

**2.** Carte selon la revendication 1, dans laquelle les moyens de détection (34) comprennent un comparateur (70).

**3.** Carte selon l'une quelconque des revendications précédentes, dans laquelle ledit composant électronique est un microprocesseur (30) commandant l'alimentation d'un dispositif par l'intermédiaire d'au moins un composant (26) parmi les deuxièmes composants.

**4.** Carte selon la revendication 3, dans lequel le dispositif est un moteur (10) de compresseur (2).

**5.** Carte selon l'une quelconque des revendications précédentes, dans laquelle la baisse prédéterminée correspond à une mise en veille du composant (30).

**6.** Carte selon l'une quelconque des revendications précédentes, comprenant des moyens d'inhibition (78) des moyens de coupure lors d'une mise en marche de la carte (12).

**7.** Procédé de commande d'une carte de circuit imprimé (12), ladite carte comprenant :

- une première portion (20) ayant des premiers composants électroniques (22) dont la masse de référence est sur une première source de tension (14) ;
- une deuxième portion (24) ayant des deuxièmes composants électroniques (26) dont la masse de référence est sur une deuxième source de tension (16) ;
- une troisième portion (28) intercalée entre la première (20) et la deuxième (24) portion et formant barrière de potentiel ;
- un circuit d'alimentation à découpage (32) raccordant la première (20) et la deuxième (24) portion, ledit circuit d'alimentation à découpage (32) comprenant un transformateur (40) ayant un primaire (42) et au moins un secondaire (44), le primaire (42) étant raccordé à la première portion (20) et le secondaire (44) étant raccordé à la deuxième portion (24) ;

ladite deuxième portion (24) comprenant également au moins un composant électronique (30) alimenté en tension par ladite première source de tension (14) par l'intermédiaire du circuit d'alimentation à découpage (32),
ledit procédé comprenant les étapes de :

- détection (96) d'une baisse d'un courant électrique ($I_P$) circulant dans le primaire (42) du transformateur (40) en dessous d'un seuil de courant prédéterminé ($I_S$) fonction d'une baisse de consommation électrique du composant (30); et
- coupure (98) de l'alimentation (14) lorsqu'une baisse prédéterminée de consommation électrique dudit composant (30) est détectée.

**8.** Procédé selon la revendication 7, dans lequel la baisse prédéterminée correspond à une mise en veille du composant (30) et le procédé comprend en outre, avant l'étape de coupure, les étapes de :

- réception (92) par le composant (30) d'un ordre de coupure de l'alimentation ; et
- mise en veille (94) du composant (30).

**9.** Boîtier de compresseur (6) comprenant une carte de circuit imprimé (12) selon l'une quelconque des revendications 1 à 6.

**Patentansprüche**

**1.** Leiterplatte (12) umfassend:

- einen ersten Teil (20) mit ersten elektronischen Komponenten (22), deren Referenzmasse sich auf einer ersten Spannungsquelle (14) befindet;
- einen zweiten Teil (24) mit zweiten elektronischen Komponenten (26), deren Referenzmasse sich auf einer zweiten Spannungsquelle (16) befindet;
- einen zwischen erstem (20) und zweitem (24) Teil angeordneten und eine Potentialbarriere bildenden dritten Teil (28);
- ein ersten (20) und zweiten (24) Teil verbindendes Schaltnetzteil (32), wobei das Schaltnetzteil (32) einen Transformator (40) mit einer Primärspule (42) und wenigstens einer Sekundärspule (44) aufweist, wobei die Primärspule (42) am ersten Teil (20) angeschlossen ist und die Sekundärspule (44) am zweiten Teil (24) angeschlossen ist;

wobei der zweite Teil (24) ebenfalls wenigstens eine mit Spannung durch die erste Spannungsquelle (14) über das Schaltnetzteil (32) versorgte elektronische Komponente (30) umfasst,
**dadurch gekennzeichnet, dass** sie ferner Mittel zum Erfassen (34) einer Abnahme des Stromverbrauchs der Komponente (30), wobei die Mittel zum Erfassen (34) zum Erfassen einer Abnahme eines in der Primärspule (42) des Transformators (40) unterhalb einer vorgegebenen Stromschwelle ($I_S$) abhängig von der vorgegebenen Abnahme des Stromverbrauchs der Komponente (30) fließenden Stroms ($I_P$) ausgebildet sind, und Mittel zum Abschalten des Schaltnetzteils (32), wenn eine vorgegebene Abnahme des Stromverbrauchs der Komponente (30) erfasst wird, umfasst.

**2.** Platte nach Anspruch 1, wobei die Mittel zum Erfassen (34) einen Komparator (70) umfassen.

**3.** Platte nach einem der vorhergehenden Ansprüche, wobei die elektronische Komponente ein die Versorgung einer Vorrichtung durch wenigstens eine Komponente (26) von den zweiten Komponenten steuernde Mikroprozessor (30) ist.

**4.** Platte nach Anspruch 3, wobei die Vorrichtung ein Motor (10) eines Kompressors (2) ist.

**5.** Platte nach einem der vorhergehenden Ansprüche, wobei die vorgegebene Abnahme einem Standby der Komponente (30) entspricht.

**6.** Platte nach einem der vorhergehenden Ansprüche, umfassend Mittel zum Sperren (78) der Abschaltmittel bei einer Inbetriebnahme der Platte (12).

**7.** Steuerverfahren einer Leiterplatte (12), wobei die Platte umfasst:

- einen ersten Teil (20) mit ersten elektronischen Komponenten (22), deren Referenzmasse sich auf einer ersten Spannungsquelle (14) befindet;
- einen zweiten Teil (24) mit zweiten elektronischen Komponenten (26), deren Referenzmasse sich auf einer zweiten Spannungsquelle (16) befindet;
- einen zwischen erstem (20) und zweitem (24) Teil angeordneten und eine Potentialbarriere bildenden dritten Teil (28);
- ein ersten (20) und zweiten (24) Teil verbindendes Schaltnetzteil (32), wobei das Schaltnetzteil (32) einen Transformator (40) mit einer Primärspule (42) und wenigstens einer Sekundärspule (44) aufweist, wobei die Primärspule (42) am ersten Teil (20) angeschlossen ist und die Sekundärspule (44) am zweiten Teil (24) angeschlossen ist;

wobei der zweite Teil (24) ebenfalls wenigstens eine mit Spannung durch die erste Spannungsquelle (14) über das Schaltnetzteil (32) versorgte elektronische Komponente (30) umfasst, wobei das Verfahren die Schritte umfasst zum:

- Erfassen (96) einer Abnahme eines in der Primärspule (42) des Transformators (40) unterhalb einer vorgegebenen Stromschwelle ($I_S$) abhängig von einer Abnahme des Stromverbrauchs der Komponente (30) fließenden Stroms ($I_P$); und
- Abschalten (98) des Netzteils (14), wenn eine vorgegebene Abnahme des Stromverbrauchs der Komponente (30) erfasst wird.

**8.** Verfahren nach Anspruch 7, wobei die vorgegebene Abnahme einem Standby der Komponente (30) entspricht und das Verfahren ferner vor dem Schritt zum Abschalten die Schritte umfasst zum:

- Empfangen (92) eines Befehls zum Abschalten des Netzteils durch die Komponente (30); und
- Schalten der Komponente (30) auf Standby (94).

**9.** Kompressorgehäuse (6) umfassend eine Leiterplatte (12) nach einem der Ansprüche 1 bis 6.

**Claims**

**1.** Printed circuit board (12) comprising:

- a first portion (20) having first electronic components (22) whose reference ground is to a first voltage source (14);
- a second portion (24) having second electronic components (26) whose reference ground is to a second voltage source (16);
- a third portion (28) inserted between the first (20) and the second (24) portion and forming a potential barrier;
- a switched-mode power supply circuit (32) connecting the first (20) and the second (24) portion, said switched-mode power supply circuit (32) comprising a transformer (40) having a primary winding (42) and at least one secondary winding (44), the primary winding (42) being connected to the first portion (20) and the secondary winding (44) being connected to the second portion (24);

said second portion (24) also comprising at least one electronic component (30) supplied with voltage by said first voltage source (14) by way of the switched-mode power supply circuit (32), **characterized in that** it furthermore comprises means (34) for detecting a drop in electrical consumption of the component (30), said detection means (34) being able to detect a drop in an electric current ($I_P$) flowing in the primary winding (42) of the transformer (40) below a predetermined current threshold ($I_S$) dependent on the predetermined drop in electrical consumption of said component (30), and means for cutting off the switched-mode power supply circuit (32) when a predetermined drop in electrical consumption of said component (30) is detected.

**2.** Board according to Claim 1, wherein the detection means (34) comprise a comparator (70).

**3.** Board according to either one of the preceding claims, wherein said electronic component is a microprocessor (30) controlling the supply of power to a device by way of at least one component (26) from among the second components.

4. Board according to Claim 3, wherein the device is a motor (10) of a compressor (2).

5. Board according to any one of the preceding claims, wherein the predetermined drop corresponds to the component (30) being put into standby.

6. Board according to any one of the preceding claims, comprising means (78) for disabling the cutoff means when the board (12) is initiated.

7. Method for controlling a printed circuit board (12), said board comprising:

- a first portion (20) having first electronic components (22) whose reference ground is to a first voltage source (14);
- a second portion (24) having second electronic components (26) whose reference ground is to a second voltage source (16);
- a third portion (28) inserted between the first (20) and the second (24) portion and forming a potential barrier;
- a switched-mode power supply circuit (32) connecting the first (20) and the second (24) portion, said switched-mode power supply circuit (32) comprising a transformer (40) having a primary winding (42) and at least one secondary winding (44), the primary winding (42) being connected to the first portion (20) and the secondary winding (44) being connected to the second portion (24);

said second portion (24) also comprising at least one electronic component (30) supplied with voltage by said first voltage source (14) by way of the switched-mode power supply circuit (32),
said method comprising the steps of:

- detecting (96) a drop in an electric current ($I_P$) flowing in the primary winding (42) of the transformer (40) below a predetermined current threshold ($I_S$) dependent on a drop in electrical consumption of the component (30); and
- cutting off (98) the power supply (14) when a predetermined drop in electrical consumption of said component (30) is detected.

8. Method according to Claim 7, wherein the predetermined drop corresponds to the component (30) being put into standby, and the method furthermore comprises, before the cutoff step, the steps of:

- receiving (92), by way of the component (30), an order to cut off the power supply; and
- putting the component (30) into standby (94).

9. Compressor housing (6) comprising a printed circuit board (12) according to any one of Claims 1 to 6.

Fig. 1

Fig. 2

EP 2 538 514 B1

Fig. 3

Fig. 4

Fig. 5

Fig. 6

Fig. 7

**EP 2 538 514 B1**

## RÉFÉRENCES CITÉES DANS LA DESCRIPTION

**Documents brevets cités dans la description**

- US 20040184289 A